# EUROPÄISCHE PATENTSCHRIFT

(11) **EP 1 832 692 B1**
(45) Veröffentlichungstag und Bekanntmachung des Hinweises auf die Patenterteilung: **15.08.2012**
(21) Anmeldenummer: 07003824.5
(22) Anmeldetag: 24.02.2007
(51) Int. Cl.: E04C 3/30, E04F 19/00, H02G 3/04

(54) **Deckenrosette für Raumsäulen**
Ceiling rosette for interior columns
Rosace de plafond pour colonnes de pièces

(30) Priorität: 10.03.2006 DE 202006003824 U
(43) Veröffentlichungstag der Anmeldung: 12.09.2007
(73) Patentinhaber: Tehalit GmbH, 67716 Heltersberg (DE)
(72) Erfinder: Arnold, Hans-Joachim, 67706 Krickenbach (DE)
(74) Vertreter: Patentanwälte Bitterich, Dr. Keller, Schwertfeger

(56) Entgegenhaltungen:
- FR-A- 2 817 719
- GB-A- 355 110
- US-A- 4 490 954

## Beschreibung

Die Erfindung betrifft Deckenrosetten für Raumsäulen gemäß dem Oberbegriff des Anspruchs 1.

Frei platzierbare Raumsäulen stellen Anschlüsse für Strom, Telefon und Netzwerke in Büros oder Gewerberäumen bereit. Die Einspeisung in die Raumsäule erfolgt entweder vom Boden, über Boden, einer Zwischendecke oder Decke. Dadurch ergeben sich vielfältige Nutzungsmöglichkeiten als Leitungsführungskanal, Anschlussmodul für elektrische Geräte oder Leuchtenträger.

Bei Einspeisung einer Raumsäule von einer Zwischendecke stellt sich häufig das Problem einen optisch und technisch einwandfreien Durchgang zur Zwischendecke zu schaffen, ohne dass ein Spalt zwischen Decke und Raumsäule sichtbar wird. Die ist aufgrund der verschiedenen geometrischen Formen von Raumsäulen nicht immer einfach sicherzustellen.

Eine Deckenrosette für Raumsäulen ist aus FR-28177 19 bekannt.

Der vorliegenden Erfindung liegt somit die Aufgabe zugrunde, eine Deckenrosette für Raumsäulen bereitzustellen, die den Durchgang einer Raumsäule durch eine Zwischendecke kaschiert, gleichzeitig einfach an die Raumsäule anbringbar ist und einen festen Halt zur Raumsäule gewährleistet.

Diese Aufgabe wird gelöst durch eine Deckenrosette gemäß dem Anspruch 1.

Ein wesentlicher Vorteil der erfindungsgemäßen Deckenrosette ist deren leichte Handhabung für einen Monteur, der sie auf einfache Weise an eine Raumsäule installiert werden kann.

Die Deckenrosette besteht aus zwei Grundelementen: Einem Basiselement, das einen Schlitz aufweist, durch den die Raumsäule geführt wird, sowie einem Schieber, der in das Basiselement eingeschoben wird. Dadurch ist eine einfache Handhabung und Montierbarkeit der Deckenrosette bei der Installation gewährleistet.

Ein weiterer Vorteil der erfindungsgemäßen Deckenrosette besteht in ihrer Klemmwirkung zur Raumsäule. Dies ist bedingt durch rechts- und linksseitig vom Schlitz angebrachte Federleisten, die sich an die Außenseiten der Raumsäule federnd anlegen, so dass das Basiselement an der Raumsäule gehalten wird, sobald es auf diese aufgeschoben ist. Der Schieber kann in den Schlitz des Basiselements geschoben werden, nachdem der Installateur die Rosette entgültig positioniert hat. Der Schieber besitzt hierzu eine rippenartige Schiene, die vorzugsweise als schiefe Ebene ausgebildet ist, umso mit der abgeschrägten Schienenführung am Basiselement zu kooperieren. Dadurch entsteht ein fester Reibverschluss zwischen Schieber und Basiselement.

In einer besonderen Ausgestaltung der Deckenrosette besitzt der Schieber Rastfinger, die mit Rastnocken an den Federleisten des Basiselements kooperieren. Dadurch werden beim Aufschieben die Federleisten weiter nach Innen an die Raumsäule gepresst, wodurch sich die Haftkraft zwischen Raumsäule und Rosette zusätzlich erhöht.

Zudem entsteht durch das Einrasten der Rastfinger in die Rastnocken des Basiselements ein stabiler Rastverschluss zwischen dem Basiselement und dem Schieber, so dass beide Elemente festsitzend zusammengehalten werden.

Ein weiterer Vorteil der Deckenrosette ist, dass sie auch an Raumsäulen mit leicht gewölbten Außenflächen aufgesetzt werden kann, da durch die federnden Leisten der Spalt zwischen der geraden Seitenkante des Schlitzes und der gewölbten Außenfläche der Raumsäule ausgeglichen wird.

In einer besonderen Ausgestaltung wird das Basiselement auf die mit dem Deckel verschlossene und damit plane Seite der Raumsäule angesetzt. Dazu ist die entsprechende Seitenkante des Schlitzes ebenfalls plan ausgebildet. Um eine leichte Montage für solche Raumsäulen zu gewährleisten, ist das Abschlusselement auf der nach Außen gerichteten Seite der Rosette zur Markierung vorzugsweise mit einer Oberflächenrippung versehen, so dass das Basiselement mit der richtigen Orientierung an die Raumsäule durch den Monteur aufgesetzt werden kann.

Für das Einführen des Schiebers in den Schlitz befinden sich am Schieber beidseitig ausgeformte Schienen und am Basiselement entsprechend ausgebildete Schienenführungen oder umgekehrt. Durch die gegensätzlich verlaufenden schiefen Ebenen der Schienenrippe und der Schienenführung entsteht beim Aufschieben des Schiebers ein fester Reibverschluss zwischen Schieber und Basiselement. Der Neigungswinkel der schiefen Ebene beträgt vorzugsweise etwa 2°. Um eine stabile Rastverbindung zu erreichen, sind die Rastfinger des Schiebers und die Rastnocken des Basiselements vorzugsweise zackenförmig ausgebildet.

Die Rastnocken sind am Abschluss der Federleiste ausgeformt und ragen in das Innere der Schienenführung, so dass beim Aufsetzen des Schiebers bedingt durch das weitere Andrücken der Federleisten gegen die Außenseite der Raumsäule eine zusätzliche Haftwirkung durch die Federspannung erreicht wird. Auf diese Weise ist die Deckenrosette festsitzend an der Raumsäule angebracht.

Anhand der Zeichnungen soll die Erfindung in Form von Ausführungsbeispielen näher erläutert werden. Es zeigen
- Fig. 1: eine isometrische Darstellung der Deckenrosette, bestehend aus Basiselement und Schieber,
- Fig. 2: eine isometrische Darstellung des auf eine Raumsäule aufgesetzten Basiselements und des dazugehörigen Schiebers,

- Fig. 3: eine isometrische Darstellung des Schieber in Draufsicht,
- Fig. 4: einen Ausschnitt der Schienenführung mit den hineinragenden Rastnocken des Basiselements und
- Fig. 5: eine isometrische Darstellung des Basiselements ohne Schieber in Seitenansicht.

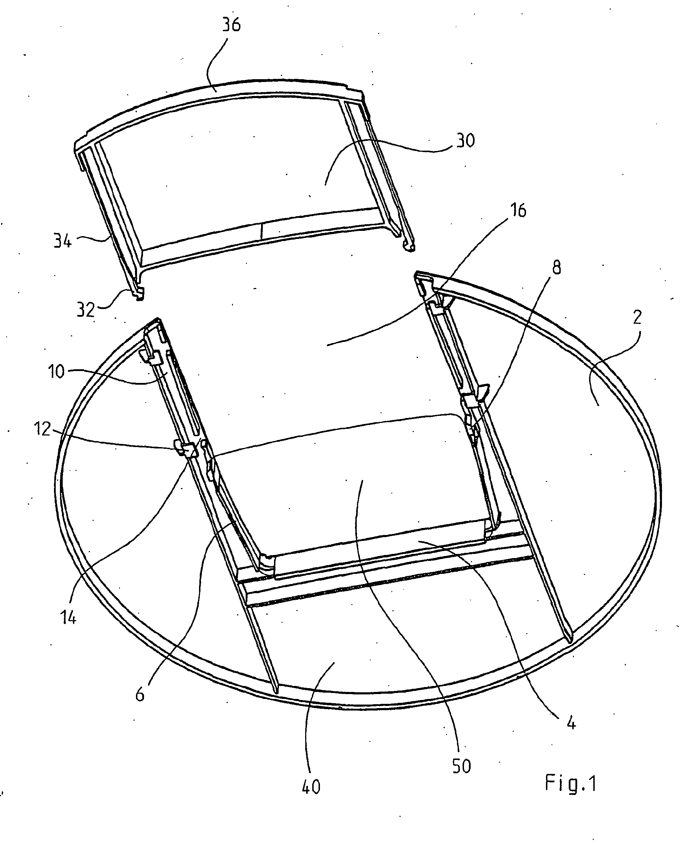

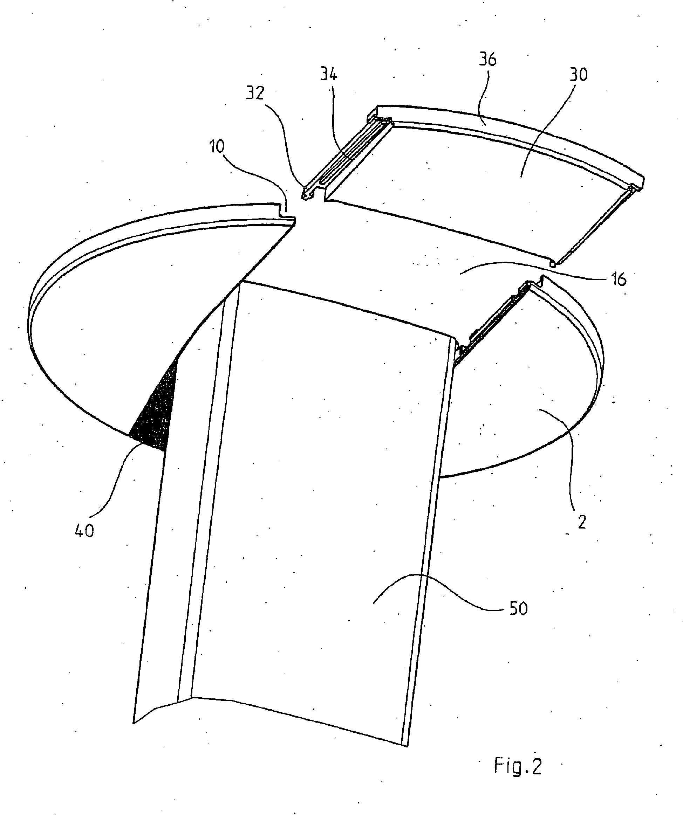

Fig. 1 zeigt eine Deckenrosette von der zur Decke zugewandten Seite. Man erkennt einen Schieber 30, ein Basiselement 2 und einen Schlitz 16, in den der Schieber 30 eingeschoben wird. Die Rosette wird durch die Seitenkanten des Schlitzes über Federleisten 6 an einer Raumsäule 50 (Fig. 2) festgehalten.

Für die Montage wird zunächst das Basiselement 2 an die Raumsäule 50 angelegt. Vorzugsweise handelt es sich bei der Raumsäule 50 um eine Raumsäule mit etwa quadratischem Querschnitt bei der die zur Aufnahme eines Deckels (nicht dargestellt) vorgesehene Seite plan ausgestaltet ist. Damit der Monteur bei der Installation die Rosette in der richtigen Orientierung an die Raumsäule anbringt, kann das Basiselement an dieser Stelle eine Oberflächenrippung als Markierung aufweisen.

Zum Einführen des Schiebers 30 in das Basiselement 2 sind rippenartige Schienen 34 am Schieber 30 vorgesehen, die in die Schienenführung 10 des Basiselements gleiten. Um das Einschieben in das Basiselement 2 zu erleichtern, befinden sich angeschrägte Führungsleisten 12 an der Schienenführung 10.

Die Schienenführung 10 und die Schiene 34 sind zur Erzeugung eines Reibverschlusses zwischen Basiselement 2 und Schieber 30 als schiefen Ebenen mit einem Neigungswinkel von ca. 2° ausgebildet. Dabei nimmt die Neigungsebene der Schiene 34 zum Schienenende zu, während die Neigungsebene der kooperierenden Schienenführung 10 entsprechend gegensätzlich verläuft, so dass mein Einführen des Schiebers ein fester Reibverschluss entsteht.

Das Basiselement 2 weist weiter Rastnocken 8 auf, die zur Erzeugung einer Rastverbindung mit den Rastfingern 32 des Schiebers 30 kooperieren. Beim Einschieben des Schiebers 30 in das Basiselement 2 rasten die Rastfinger 32 in die hinteren Rastnocken 8 ein, so dass der Schieber 30 fest mit dem Basiselement 2 verbunden ist.

Durch das Einführen des Schiebers 30 werden die Federleisten 6 noch stärker gegen die Außenseiten der Raumsäule 50 gepresst, so dass die Haftkraft zwischen Raumsäule und Rosette zusätzlich erhöht wird.

Fig. 2 zeigt das an einer Raumsäule 50 bereits angebrachte Basiselement 2 von der Sichtseite. In den Schlitz 16 wird der Schieber 30 über die beidseitig angeordneten Schienenführungen 10 und den Schienen 34 in den Schlitz eingeführt, bis ein schlüssiger Abschluss des Basiselements 2 mit Außenkante 36 des Schiebers 30 entsteht.

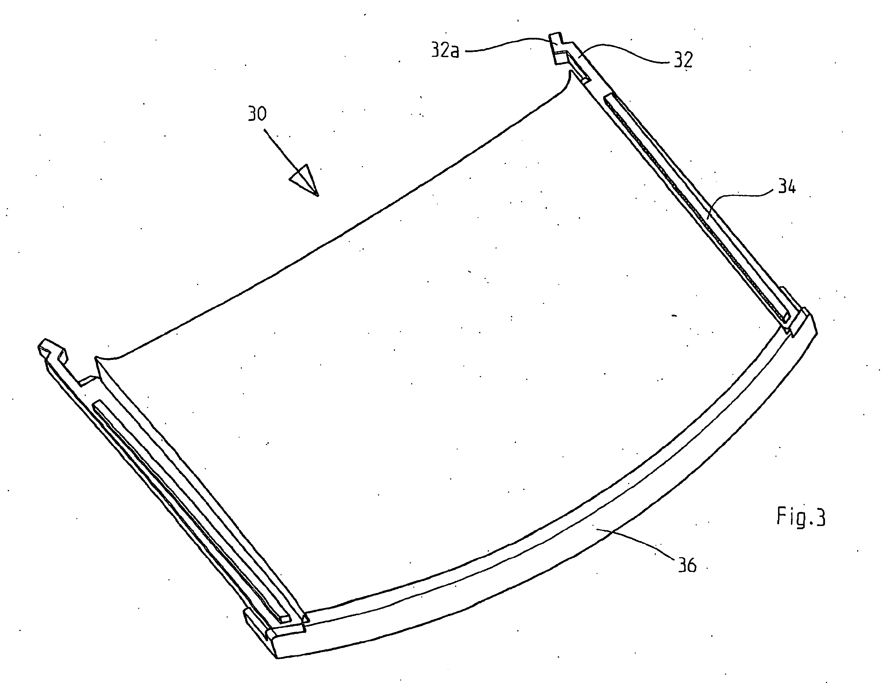

Fig. 3 zeigt eine Aufsicht des Schiebers 30 mit der zur Decke gerichteten Funktionsseite. Man erkennt die Außenkante 36 sowie die zum Einführen des Schiebers 30 in den Schlitz 16 des Basiselements 2 vorgesehenen, beidseitig gelegenen Schienen 34 und Rastfinger 32. Die Rastfinger 32 sind an ihrem Ende zackenförmig ausgebildet, so dass über deren Zacken 32a eine Rastverbindung mit den Rastnocken 8 des Basiselements 2 entsteht.

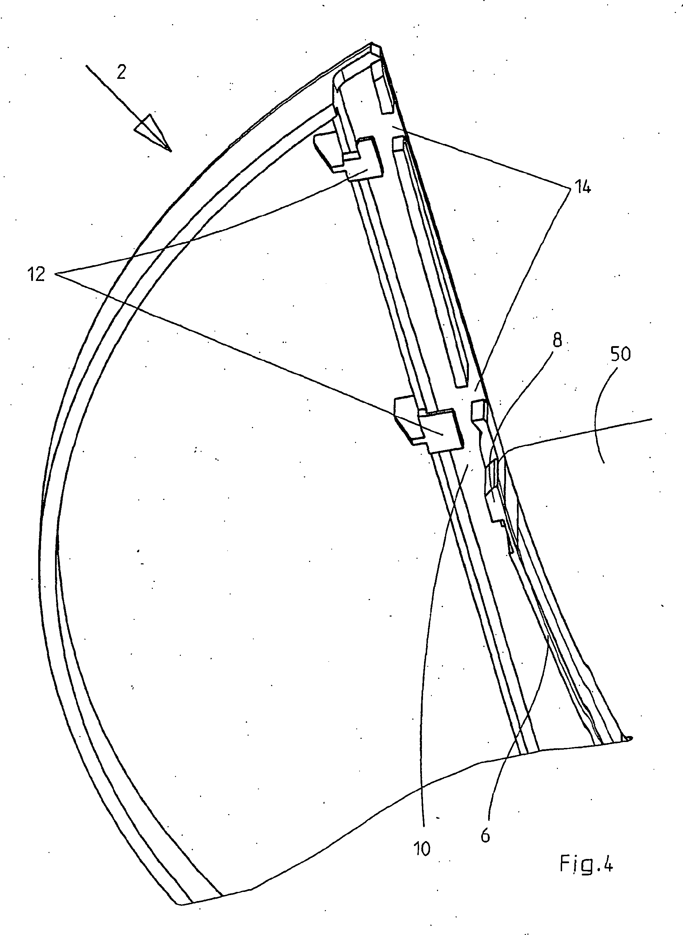

Fig. 4 zeigt einen Ausschnitt der abgeschrägten Schienenführung 10 des Basiselements 2. Die Position der Raumsäule 50 ist schematisch dargestellt. Um das Einführen des Schiebers 30 zu erleichtern, befinden sich an der Schienenführung 10 eine oder mehrere angeschrägte Führungsleisten 12.
Daneben können für zusätzliche Zwischenraststellungen des Schiebers 30 Aussparungen 14 vorgesehen sein.

Die Rosette wird zunächst über beidseitig gelegene Federleisten 6 an die Raumsäule 50 angeklemmt. Dadurch entsteht ein durch Federkraft bewirkter fester Halt des Basiselements 2 an die Raumsäule 50.

Die Federleisten 6 werden über die Rastnocken 8 beim Einführen des Schiebers 30 über dessen Rastfinger 34 noch weiter nach Innen gedrückt wodurch die Haftwirkung zunimmt.

Die Rastnocken 8 kooperieren mit den Rastfingern 32 des Schiebers 30, so dass ein fester Rastverschluss mit dem Schieber 30 entsteht.

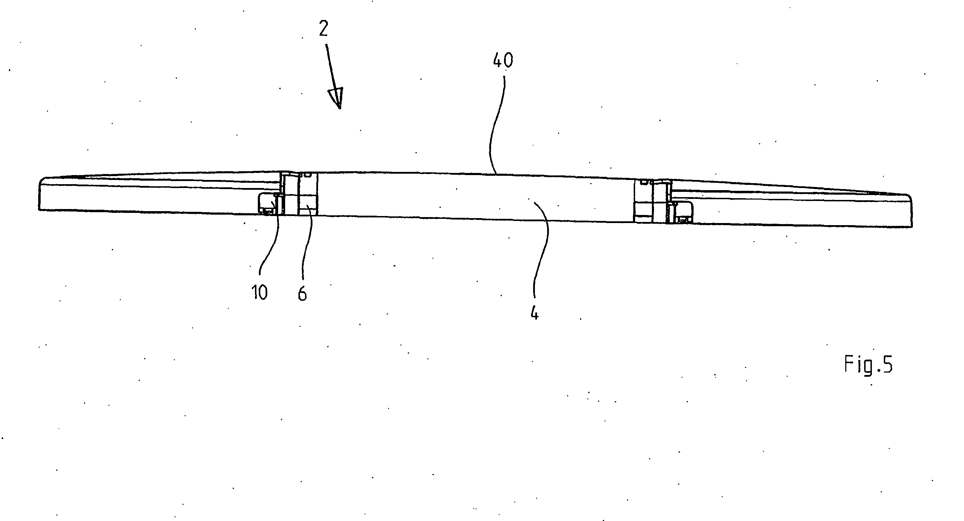

Fig. 5 zeigt das Basiselement 2 von der Seitenansicht. Man erkennt die beidseitig am Basiselement ausgeformten abgeschrägten Schienenführungen 10, die hintere Seitenkante des Schlitzes mit dem Steg 4 sowie das dahinter ausgeformte Abschlusselement 40. Weiter erkennt man die zur Befestigung des Basiselements vorgesehenen Federleisten 6.

## Patentansprüche

1. Deckenrosette für Raumsäulen, umfassend
- ein Basiselement (2) mit einem zur Aufnahme einer Raumsäule (50) ausgeformten Schlitz (16), an Basiselement befinden sich Jederleisten, die egen die Außenseiten einer durch das Basiselement (2) durchgehenden Raumsäule (50) drücken, um das Basiselement (2) an der Raumsäule (50) zu halten,
- einen Schieber (30),
**gekennzeichnet durch** die Merkmale: - der Schieber wird in dem Schlitz des Basiselements geschoben;
- die Federleisten (6) als Seitenkanten des Schlitzes (16) ausgeformt sind am Basiselement (2) befinden sich Schienenführungen (10) zum Einführen des Schiebers (30),
- am Schieber (30) befinden sich
- Schienen (34), die in die Schienenführungen (10) des Basiselements (2) gleiten.

2. Deckenrosette nach Anspruch 1, **gekennzeichnet durch** das Merkmal:
- an der Schienenführung (10) sind angeschrägte Führungsleisten (12) ausgeformt.

3. Deckenrosette nach Anspruch 1 oder 2, **gekennzeichnet durch** die Merkmale:
- an den Federleisten (6) befindet sich Rastnocken (8),
- an der Schiene (34) des Schiebers (30) sind Rastfinger (32) ausgeformt,
- Rastfinger (32) und Rastnocken (8) kooperieren derart, dass ein Rastverschluss erzeugt wird.

4. Deckenrosette nach Anspruch 3, **gekennzeichnet durch** das Merkmal:
- die Rastnocken (8) besitzen Kanten, die in die Schienenführung ragen (10).

5. Deckenrosette nach einem der Ansprüche 1 bis 4, **gekennzeichnet durch** das Merkmal:
- am Schieber (30) ist eine Abschlusskante (36) ausgeformt.

6. Deckenrosette nach einem der Ansprüche 1 bis 5, **gekennzeichnet durch** das Merkmal:
- die Federleisten (6) werden von einem Steg (4) umfasst.

7. Deckenrosette nach Anspruch 6, **gekennzeichnet durch** das Merkmal:
- der Steg (4) besitzt eine plane Ausgestaltung.

8. Deckenrosette nach einem der Ansprüche 1 bis 7, **gekennzeichnet durch** das Merkmal:
- die Rastfinger (32) sind aus der Schiene (34) ausgeformt.

9. Deckenrosette nach einem der Ansprüche 3 bis 8, **gekennzeichnet durch** das Merkmal:
- die Rastringer (32) sind zackenförmig ausgebildet,

10. Deckenrosette nach einem der Ansprüche 1 bis 9, **gekennzeichnet durch** das Merkmal:
- das Abschlusselement (40) am Basiselement (2) besitzt eine Oberflächenrippung.

11. Deckenrosette nach einem der Ansprüche 1 bis 10, **gekennzeichnet durch** das Merkmal:
- die Schienenführung (10) und die Schiene (34) sind zur Erzeugung eines Reibverschlusses zwischen Basiselement (2) und Schieber (30) als schiefe Ebenen ausgebildet.

12. Deckenrosette nach einem der Ansprüche 1 bis 11, **gekennzeichnet durch** das Merkmal:
- an der Schienenführung (10) des Basiselements (2) befinden sich Aussparungen (14).

13. Deckenrosette nach einem der Ansprüche 1 bis 12, **gekennzeichnet durch** die Merkmale:
- die Schienenführungen (10) befindet sich am Schieber (30),
- die Schienen (34) befinden sich am Basiselement (2).

## Claims

1. A ceiling rosette for room columns, comprising
- a base element (2) with a slot (16) formed therein to receive a room column (50), spring strips are disposed on the base element which press against the outsides of a room column (50) passing through the base element (2) so as to hold the base element (2) on the room column (50),
- a slide (30),
**characterised by** the features:
- the slide is pushed into the slot in the base element,
- the spring strips (6) are formed as side edges of the slots (16),
- rail guides (10) are disposed on the base element (2) for the insertion of the slide (30),
- on the slide (30) there are disposed
- rails (34) which slide in the rail guides (10) of the base element (2).

2. A ceiling rosette according to Claim 1, **characterised by** the feature:
- bevelled guide strips (12) are formed on the rail guide (10).

3. A ceiling rosette according to Claim 1 or 2, **characterised by** the features:
- detent cams (8) are disposed on the spring strips (6),
- detent fingers (32) are formed on the rail (34) of the slide (30),
- the detent fingers (32) and detent cams (8) co-operate in such a way that a detent fastener is provided.

4. A ceiling rosette according to Claim 3, **characterised by** the feature:
- the detent cams (8) have edges which project into the rail guide (10).

5. A ceiling rosette according to any one of Claims 1 to 4, **characterised by** the feature:
- an end edge (36) is formed on the slide (30).

6. A ceiling rosette according to any one of Claims 1 to 5, **characterised by** the feature:
- the spring strips (6) are enclosed by a web (4).

7. A ceiling rosette according to Claim 6, **characterised by** the feature:
- the web (4) is of flat configuration.

8. A ceiling rosette according to any one of Claims 1 to 7, **characterised by** the feature:
- the detent fingers (32) are formed from the rail (34).

9. A ceiling rosette according to any one of Claims 3 to 8, **characterised by** the feature:
- the detent fingers (32) are of zigzag form.

10. A ceiling rosette according to any one of Claims 1 to 9, **characterised by** the feature:
- the end element (4) on the base element (2) has surface ribs.

11. A ceiling rosette according to any one of Claims 1 to 10, **characterised by** the feature:
- the rail guide (10) and the rail (34) are formed as inclined planes so as to create a frictional closure between the base element (2) and the slide (30).

12. A ceiling rosette according to any one of Claims 1 to 11, **characterised by** the feature:
- recesses (14) are provided in the rail guide (10) of the base element (2).

13. A ceiling rosette according to any one of Claims 1 to 12, **characterised by** the features:
- the rail guides (1) are disposed on the slide (30),
- the rails (34) are disposed on the base element (2).

## Revendications

1. Rosace de plafond pour colonnes de raccordement, comprenant
- un élément de base (2) avec une ouverture (16) conçue pour recevoir une colonne de raccordement (50), sachant que des barrettes à ressort se trouvent sur l'élément de base, lesquelles exercent une pression contre les côtés extérieurs d'une colonne de raccordement (50) traversant l'élément de base (2), afin de maintenir l'élément de base (2) sur la colonne de raccordement (50),
- un élément coulissant (30),
**caractérisée par** les caractéristiques suivantes :
- l'élément coulissant est glissé dans l'ouverture de l'élément de base,
- les barrettes à ressort (6) sont conçues comme bords latéraux de l'ouverture (16),
- des glissières (10) se trouvent sur l'élément de base (2), pour y introduire l'élément coulissant (30),
- des rails (34) se trouvent sur l'élément coulissant (30), lesquels glissent dans les glissières (10) de l'élément de base (2).

2. Rosace de plafond selon la revendication 1, **caractérisée par** la caractéristique suivante :
- des barrettes de guidage chanfreinées (12) sont formées sur la glissière (10).

3. Rosace de plafond selon la revendication 1 ou 2, **caractérisée par** les caractéristiques suivantes :
- des ergots d'enclenchement (8) se trouvent sur les barrettes à ressort (6),
- des doigts d'enclenchement (32) sont formés sur le rail (34) de l'élément coulissant (30),
- les doigts d'enclenchement (32) et les ergots d'enclenchement (8) coopèrent de telle sorte qu'une liaison par enclenchement est produite.

4. Rosace de plafond selon la revendication 3, **caractérisée par** la caractéristique suivante :
- les ergots d'enclenchement (8) possèdent des bords qui font saillie dans la glissière (10).

5. Rosace de plafond selon l'une des revendications 1 à 4, **caractérisée par** la caractéristique suivante :
- un bord de terminaison (36) est formé sur l'élément coulissant (30).

6. Rosace de plafond selon l'une des revendications 1 à 5, **caractérisée par** la caractéristique suivante :
- les barrettes à ressort (6) sont entourées par une bordure (4).

7. Rosace de plafond selon la revendication 6, **caractérisée par** la caractéristique suivante :
- la bordure (4) possède une configuration plane.

8. Rosace de plafond selon l'une des revendications 1 à 7, **caractérisée par** la caractéristique suivante :
- les doigts d'enclenchement (32) sont formés à partir du rail (34).

9. Rosace de plafond selon l'une des revendications 3 à 8, **caractérisée par** la caractéristique suivante :
- les doigts d'enclenchement (32) sont réalisés en forme de fourchons.

10. Rosace de plafond selon l'une des revendications 1 à 9, **caractérisée par** la caractéristique suivante :
- l'élément de terminaison (40) sur l'élément de base (2) possède un nervurage de surface.

11. Rosace de plafond selon l'une des revendications 1 à 10, **caractérisée par** la caractéristique suivante :
- la glissière (10) et le rail (34) sont réalisés sous la forme de plans inclinés afin de créer une liaison par friction entre l'élément de base (2) et l'élément coulissant (30).

12. Rosace de plafond selon l'une des revendications 1 à 11, **caractérisée par** la caractéristique suivante :
- des évidements (14) se trouvent sur la glissière (10) de l'élément de base (2).

13. Rosace de plafond selon l'une des revendications 1 à 12, **caractérisée par** les caractéristiques suivantes :
- les glissières (10) se trouvent sur l'élément coulissant (30),
- les rails (34) se trouvent sur l'élément de base (2).
